# EUROPEAN PATENT APPLICATION

(11) **EP 1 618 793 A1**
(43) Date of publication of application: **25.01.2006**
(21) Application number: 04017068.0
(22) Date of filing: 20.07.2004
(51) Int. Cl.: A23F 3/38

(54) **Extracts of Camellia sinensis with low alkaloid content**

(71) Applicant: Cognis IP Management GmbH, 40589 Düsseldorf (DE)
(72) Inventor: Rull Prous, Santiago, 08034 Barcelona (ES); Villar, Agustin, 08291 Ripollet (ES); Gomez Garcia, Antonio, 08030 Barcelona (ES); Fabry, Bernd, 41352 Korschenbroich (DE)

(57) **Abstract**

Suggested are new extracts of *Camellia sinensis* which are characterised in that they comprise -calculated on the dry active matter-
(a) 45 to 55 % b.w. of catechins and flavins, and
(b) less than 0.5 % b.w. of alkaloids.

The extracts are prepared by cation exchange treatment of green tea extract.

## Description

### Object of the invention

The present invention relates to the area of botanicals and, more particularly, refers to new extracts of green tea with a reduced content of undesired alkaloids such as caffeine, a process for obtaining said extracts, and their use in food applications.

### State of the art

The *Theaceae* family consists of about 40 genera and 600 species. The most common species is *Camellia sinensis* or *Thea sinensis* (tea) as a synonym. Tea leaves contain many compounds, such as polysaccharides, volatile oils, vitamins, minerals, purines, alkaloids and polyphenols (catechins and flavonoids). Although all three tea types possess antibacterial and free radical capturing (antioxidising) properties, their efficacy decreases substantially the darker the variety of tea is. This is due to the lower content of anti-oxidising polyphenols that remains in the leaves. Among the various components of green tea extracts, polyphenols of the flavonoid and catechin type ("tea tannins") are the most important ones.

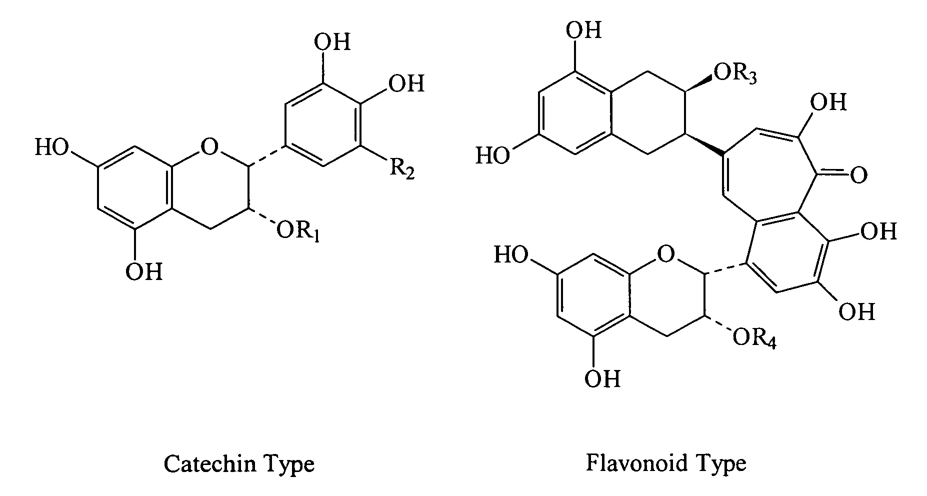

| | R1 | R2 | R3 | R4 |
|---|---|---|---|---|
| (-)-Epicatechin | H | H | | |
| (-) Epigallocatechin | H | OH | | |
| (-) Epicatechin gallate | Galloyl | H | | |
| (-) Epigallocatechin gallate | Galloyl | OH | | |
| Theaflavin | | | H | H |
| Theaflavin monogallate A | | | Galloyl | H |
| Theaflavin monogallate B | | | H | Galloyl |
| Theaflavin digallate | | | Galloyl | Galloyl |

Although extracts of green tea are reported to have quite a number of advantageous properties, e.g., as antioxidants, the amount of alkaloids, particularly of caffeine which is up to 10 % b.w., is seriously undesired for application in the nutrition and health area.

Therefore, the problem underlying the invention has been to develop a new process for obtaining extracts of Camellia sinensis with a reduced content of alkaloids such as, e.g., caffeine.

### Description of the invention

The present invention claims extracts of *Camellia sinensis,* which are characterised in that they comprise - calculated on the dry active matter -
(a) 45 to 55 % b.w. of catechins and flavins, and
(b) less than 0.5 % b.w. of alkaloids, in particular less than 0.5 % b.w. of caffeine.

More particularly, the present invention refers to extracts of *Camellia sinensis,* comprising - calculated on the dry active matter -
(a1) 10 to 15 % b.w. of epigallocatechin gallate,
(a2) 19.5 to 29.5 % b.w. of catechins and flavins selected from the group consisting of gallocatechin, epicatechin, epigallocatechin, epicatechin gallate, theaflavin and theaflavin gallates and
(b) less than 0.5 % b.w. of alkaloids.

Another object of the invention refers to a new process according to which said extracts can be obtained showing a particularly low content of alkaloids. This process is characterised in that
(a) leaves of green tea are subjected to an aqueous extraction to give a liquid fraction I and a solid residue, and
(b) the liquid fraction I thus obtained is forced to pass a cation exchange resin to give a low-alkaloid liquid fraction II.

Surprisingly, the combination of aqueous extraction followed by adsorption using a cation exchange resin has been found highly suitable for obtaining extracts of green tea that are virtually free of alkaloids. A further advantage of the invention is that said extracts are obtained under easy and economic conditions.

### Process conditions

The conditions for carrying out both the extraction and the adsorption steps are known as such. Generally, the aqueous extraction should be carried out at temperatures in the range from 60° to 90° C, and preferably from 70° to 80 °C in order to avoid any decomposition of the active ingredients. The extraction may take place in any suitable equipment, however, a percolator has been found particularly useful. The ratio between Camellia leaves and water has not been found critical, but as a general rule it is suggested to establish a relation of 5 to 15 parts of water for each part of dried leaves. The time of extraction is linked to the temperature; usually 1 to 2 hours will guarantee a maximum yield. After separating the liquid fraction I from the residue it is advisable to concentrate the product to shorten the time in the second step of the process. In order to optimise adsorption it has been found advantageous to adjust the flow rate of the liquid fraction from 0.5 to 2 BV/h, and more particularly to about 1 BV/h. Although quite a number of standard exchange resins have been found suitable in order to eliminate the caffeine from the liquid, the best results were obtained by using divinyl benzene copolymer types. After leaving the adsorption column, the liquid fraction II thus obtained is optionally dried, for example, by using conventional spray-drying or lyophilisation. The caffeine can be desorbed from the resin by using standard solvents in order to obtain a caffeine extract which can be used for other applications.

### Industrial application

Since the new extracts are substantially free of or at least showing a rather low content of alkaloids, in particular of caffeine, a further object of the present invention is aimed at the use of the extracts for making food compositions in general and dietary supplements in particular.

### Examples

### Comparative Example C 1

In order to form an aqueous mixture, 100 kg of dry green tea leaves were mixed with 1000 1 of deionised water in a jacketed vessel. The mixture was heated to between 70° and 80°C for 1 hour. After this time the extract was filtered in order to separate the leaves from the liquid extract. The filtrate was transferred into a vessel coupled to vacuum and concentrated at 70 °C until reaching a soft consistency. The concentrate was transferred into a vacuum drier and dried at 70 °C and 60 mm Hg. 9 kg of aqueous green tea extract were obtained. Based on the dry active matter the amount of catechins was between 45 and 55 % b.w., and the content of caffeine was between 6 and 8 % b.w.

### Example 1

An aqueous green tea extract was prepared in the same manner as in Comparative Example C1. The filtrate separated from the leaves corresponded to an aqueous extract of green tea containing caffeine. This filtrate was forced to pass through 300 kg of a strong cationic exchange resin divinyl benzene copolymer type with a flow rate adjusted to 1 BV per hour. The liquid eluted was transferred into a vessel coupled to vacuum and was concentrated at 60 °C until reaching a soft consistency. The concentrate was transferred into a vacuum drier and dried at 60° C and 60 mm Hg. 8 kg of aqueous green tea extract low in caffeine were obtained. Based on the dry active matter the amount of catechins was between 45 to 55 % b.w., and the content of caffeine was at 0.5 % b.w.

### Example 2

An aqueous green tea extract was prepared in the same manner as in Example 1, except that the extraction was performed in a percolation system.

### Example 3

An aqueous green tea extract low in caffeine was prepared in the same manner as in Example 2, except that the concentrate from the elution through ionic resin was dried in a spray drier system.

## Claims

1. Extracts of *Camellia sinensis,* **characterised in that** they comprise - calculated on the dry active matter -
(a) 45 to 55 % b.w. of catechins and flavins, and
(b) less than 0.5 % b.w. of alkaloids.

2. Extracts of *Camellia sinensis,* **characterised in that** they comprise - calculated on the dry active matter -
(a1) 10 to 15 % b.w. of epigallocatechin gallate,
(a2) 19.5 to 29.5 % b.w. of catechins and flavins selected from the group consisting of gallocatechin, epicatechin, epigallocatechin, epicatechin gallate, theaflavin and theaflavin gallates and
(b) less than 0.5 % b.w. of alkaloids.

3. Process for making extracts of *Camellia sinensis* with low alkaloid content, **characterised in that**
(a) leaves of green tea are subjected to an aqueous extraction to give a liquid fraction I and a solid residue, and
(b) the liquid fraction I thus obtained is forced to pass a cation exchange resin to give a low-alkaloid liquid fraction II.

4. Process according to claim 2, **characterised in that** the aqueous extraction is carried out at temperatures between 60° and 90 °C.

5. Process according to claims 2 and/or 3, **characterised in that** the aqueous extraction of the leaves takes place in a percolator.

6. Process according to any of claims 2 to 4, **characterised in that** the flow rate of the liquid fraction I is adjusted to 0.5 to 2 BV/h.

7. Process according to any of claims 2 to 5, **characterised in that** a cation exchange resin of the divinyl benzene copolymer type is used.

8. Process according to any of claims 2 to 6, **characterised in that** the liquid fraction II is subsequently dried.

9. Use of the extracts according to claims 1 and/or 2 for making dietary supplements.

10. Use of the extracts according to claims 1 and/or 2 for making food compositions.
